# EUROPÄISCHE PATENTSCHRIFT

(11) **EP 1 551 065 B1**
(45) Veröffentlichungstag und Bekanntmachung des Hinweises auf die Patenterteilung: **15.10.2008**
(21) Anmeldenummer: 04023862.8
(22) Anmeldetag: 07.10.2004
(51) Int. Cl.: H01L 41/04, F02D 41/20

(54) **Verfahren und Vorrichtung zur Bestimmung der Ansteuerspannung für einen piezoelektrischen Aktor eines Einspritzventils**
Method and device for determining the drive voltage of a piezoelectric actuator of an injection valve
Procédé et appareil de détermination de la tension de commande d'un actionneur piézoélectrique d'une soupape d'injection

(30) Priorität: 11.12.2003 DE 10357872
(43) Veröffentlichungstag der Anmeldung: 06.07.2005
(73) Patentinhaber: ROBERT BOSCH GMBH, 70442 Stuttgart (DE)
(72) Erfinder: Rau, Andreas, 70499 Stuttgart (DE)

(56) Entgegenhaltungen:
- EP-A- 1 172 541
- WO-A-03/081007
- DE-A1- 19 930 309

## Beschreibung

### Stand der Technik

Die Erfindung betrifft ein Verfahren und eine Vorrichtung zur Bestimmung der Ansteuerspannung für einen piezoelektrischen Aktor eines Einspritzventils nach der Gattung der unabhängigen Ansprüche 1 und 10.

Aus der DE 100 32 022 A1 ist beispielsweise ein Verfahren zur Bestimmung der Ansteuerspannung für einen piezoelektrischen Aktor eines Einspritzventils der gattungsgemäßen Art bekannt. Bei diesem Verfahren wird nach einem Einspritzvorgang ein dem Druck im hydraulischen Koppler entsprechender Parameter gemessen und mit diesem Parameter mittels eines vorgegebenen Algorithmus ein Wert für die Ansteuerspannung des piezoelektrischen Aktors bestimmt.

Bei Einspritzventilen mit piezoelektrischen Aktoren, sogenannten Injektoren, müssen sehr enge Toleranzen während der Fertigung eingehalten werden, um einerseits eine hohe Ausbringung zu erzielen, und um andererseits ein stabiles Verhalten des Injektors über dessen Lebenszeit zu garantieren. Enge Toleranzen sind insbesondere erforderlich, weil Sensoren zur Überwachung des Verhaltens des Injektors aus Kostengründen ausscheiden. Um sehr enge Toleranzen während der Herstellung vermeiden zu können, und damit hohe Herstellungskosten zu vermeiden, ist es auch bekannt, das Driftverhalten des Injektors bei zum Beispiel Temperaturwechseln, Änderungen der Kraftverhältnisse in der Schaltkette infolge Verschließ, Ermüdung oder Alterung der Piezo-Keramik zu minimieren. Voraussetzung hierfür ist, daß der Injektor in einem möglichst stabilen Arbeitspunkt betrieben wird, in welchem sich ändernde Injektorparameter nur geringe Auswirkungen auf die Einspritzmenge zeigen. Um einen solchen stabilen Arbeitspunkt zu finden, wird der Injektor im Rahmen der Endprüfung mit zunehmenden Spannungen betrieben und ermittelt, bei welcher Spannung die Einspritzung beginnt. Diese Spannung wird mit einem offset versehen und der so ermittelte Wert wird dann als Spannungsbedarf des Injektors definiert. Eine andere Möglichkeit besteht darin, die Mengendrift vorab abzuschätzen und über Korrekturkennlinien im Steuergerät zumindest teilweise zu kompensieren.

Eine Kompensation über vorab definierte Kennlinien stößt jedoch an ihre Grenzen, wenn die einzelnen Injektoren in einer mehrzylindrischen Brennkraftmaschine unterschiedlich driften und dies aufgrund fehlender Sensoren nicht erfaßt und in einem Steuergerät berücksichtigt werden kann. Darüber hinaus kann durch das bekannte Verfahren zur Ermittlung des Spannungsbedarfs nicht die Spannung ermittelt werden, bei der das Ventilschließglied an seinem zweiten Sitz angelangt ist. Die Kenntnis dieser Spannung ist jedoch Voraussetzung für einen stabilen Arbeitspunkt.

Aufgabe der Erfindung ist es daher, ein Verfahren zur Bestimmung der Ansteuerspannung für einen piezoelektrischen Aktor eines Einspritzventils der eingangs beschriebenen Art dahingehend weiterzubilden, daß für jeden Injektor in der Brennkraftmaschine der individuelle Spannungsbedarf entsprechend dem Drift bzw. Alterungszustand des Injektors ermittelt, diese Spannung bei Bedarf angepaßt und so der Injektor immer in einem stabilen Zustand betrieben werden kann. Hierdurch soll es insbesondere auch möglich sein, im Betrieb zu erkennen, ob sich bei einem Injektor der Hub oder die Kraft, die der Piezoaktor auf den hydraulischen Koppler ausübt, beispielsweise infolge Alterung, ändert, um so beispielsweise eine Verkleinerung des Hubs und eine Verkleinerung der Kraft durch Erhöhen der an dem Piezoaktor anliegenden Spannung kompensieren zu können.

### Vorteile der Erfindung

Diese Aufgabe wird bei einem Verfahren und einer Vorrichtung zur Bestimmung der Ansteuerspannung für einen piezoelektrischen Aktor eines Einspritzventils der eingangs beschriebenen Art gelöst durch die Merkmale der Ansprüche 1 und 10. Vorteilhafte Ausgestaltungen des Verfahrens und der Vorrichtung sind Gegenstand der Unteransprüche.

Grundidee der Erfindung ist es, die Piezokeramik selbst als Sensor zu benutzen, so daß keine zusätzlichen Sensoren erforderlich sind und so auch keine Kosten für zusätzliche Sensoren entstehen. Hierzu wird eine erste, sich nach dem Aufladen des piezoelektrischen Aktors einstellende maximale Spannung und eine zweite, sich kurz vor dem Entladen des piezoelektrischen Aktors einstellende Spannung bei unterschiedlichen, jeweils in dem gleichen Zeitintervall auf den piezoelektrischen Aktor aufgebrachten Ladeströmen erfaßt und die Beziehung zwischen der zweiten und der ersten Spannung ausgewertet und hieraus auf den Spannungsbedarf des Piezoaktors und damit auf die Position des Verschließgliedes geschlossen. Dabei kann insbesondere eine Aussage darüber getroffen werden, wann das Ventilschließglied den ersten Ventilsitz verläßt und in seinem zweiten Sitz angekommen ist.

Bevorzugt erfolgt dabei die Auswertung der Relation zwischen der zweiten und der ersten Spannung anhand eines funktionalen Zusammenhangs zwischen der zweiten Spannung und der ersten Spannung.

Zur Ermittlung dieses funktionalen Zusammenhangs wird bevorzugt beginnend von einem vorgegebenen ersten Strom der auf den piezoelektrischen Aktor aufgebrachte Strom schrittweise verringert und der funktionale Zusammenhang zwischen der zweiten Spannung und der ersten Spannung bei jedem Strom ermittelt und gespeichert. Aus der ersten und weiteren Ableitungen der zweiten Spannung nach der ersten Spannung, daß heißt durch eine Bestimmung der Steigung, der Maximalwerte und dergleichen des funktionalen Zusammenhangs zwischen der ersten Spannung als unabhängige Variable und der zweiten Spannung als abhängige Variable wird so auf den Spannungsbedarf des piezoelektrischen Aktors geschlossen.

Bei einer anderen vorteilhaften Ausführungsform wird der auf den piezoelektrischen Aktor aufgebrachte Strom ausgehend von einem ersten vorgegebenen Wert schrittweise verringert und der funktionale Zusammenhang zwischen der zweiten Spannung und der ersten Spannung ermittelt. In diesem Fall werden lineare Bereiche des funktionalen Zusammenhangs bestimmt und ein Schnittpunkt zwischen benachbarten linearen Bereichen ermittelt, wobei dieser Wert als Spannungsbedarf des piezoelektrischen Aktors gewertet wird.

Bei einer weiteren vorteilhaften Ausführungsform wird dabei so vorgegangen, daß parallel zu den benachbarten linearen Bereichen um vorgegebene Werte verschobene Geraden gebildet werden und der Schnittpunkt dieser Toleranzbereiche bestimmt und der so ermittelte Wert der zweiten Spannung als Spannungsbedarf des piezoelektrischen Aktors gewertet wird. Die so jeweils ermittelte zweite Spannung wird in diesem Falle als die Ansteuerspannung gespeichert und der piezoelektrische Aktor mit dieser eventuell mit einem Offset versehenen Ansteuerspannung, in der das Ventilschließglied den zweiten Sitz erreicht, betrieben. Da der Spannungsbedarf auf vorbeschriebene Weise individuell ermittelt und überwacht wird, kann durch einen übergeordneten Regelkreis dafür gesorgt werden, daß die Steuerspannung der einzelnen Injektoren immer dem dem jeweiligen Alterungszustand entsprechenden Spannungsbedarf angepaßt ist. Hierdurch wird die Einspritzmengendrift der Injektoren über deren Lebenszeit reduziert und es können größere Toleranzen in der Schaltkette bestehend aus piezoelektrischem Aktor, hydraulischem Koppler und Schaltventil, zugelassen werden, was wiederum eine erhebliche Kostenersparnis bei der Herstellung ermöglicht.

### Zeichnung

Weitere Vorteile und Merkmale der Erfindung sind Gegenstand der nachfolgenden Beschreibung sowie der zeichnerischen Darstellung von Ausführungsbeispielen der Erfindung.

In der Zeichnung zeigen:
- Fig. 1: den schematischen Aufbau eines Einspritzventils,
- Fig. 2: schematisch der auf einen piezoelektrischen Aktor aufgebrachte Ladestrom, die am piezoelektrischen Aktor anliegende Spannung sowie der hierdurch bewirkte Schaltventilhub über der Zeit;
- Fig. 3: schematisch die Bestimmung des Spannungsbedarfs anhand eines Diagramms, in dem der funktionale Zusammenhang der zweiten Spannung zur ersten Spannung bei unterschiedlichen Ladeströmen dargestellt ist und
- Fig. 4: schematisch ein weiteres Ausführungsbeispiel für die Bestimmung des Spannungsbedarfs anhand eines Diagramms, in dem der funktionale Zusammenhang der zweiten Spannung zur ersten Spannung bei unterschiedlichen Ladeströmen dargestellt ist.

### Beschreibung der Ausführungsbeispiele

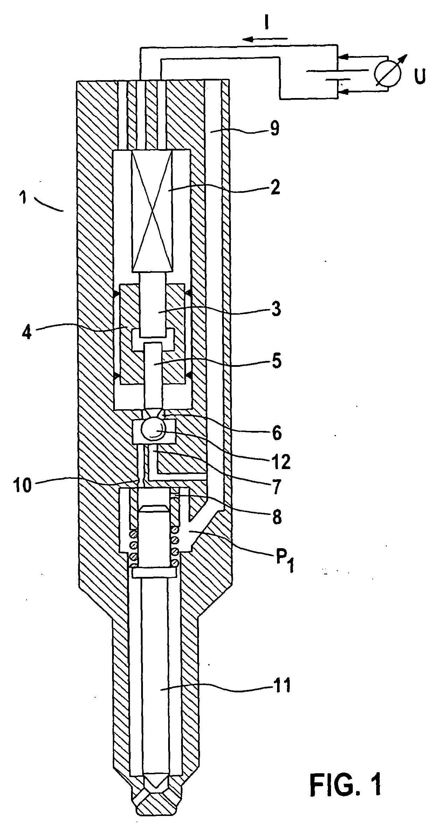

Ein in Fig. 1 in schematischer Darstellung gezeigtes Einspritzventil mit einer zentralen Bohrung weist in seinem oberen Teil einen Stellkolben 3 mit einem piezoelektrischen Aktor 2 auf, wobei der Stellkolben 3 mit dem Aktor 2 fest verbunden ist. Der Stellkolben 3 schließt nach oben hin einen hydraulischen Koppler 4 ab, während nach unten eine Öffnung mit Verbindungskanal zu einem ersten Sitz 6 vorgesehen ist, indem ein Kolben 5 mit einem Verschließglied 12 angeordnet ist. Das Verschließglied 12 ist als doppelt schließendes Steuerventil ausgebildet. Es verschließt den ersten Sitz 6 wenn der Aktor 2 in Ruhephase ist. Bei Betätigung des Aktors 2, das heißt bei Anlegen einer Ansteuerspannung U an den Klemmen +, -, betätigt der Aktor 2 den Stellkolben 3 und drückt über den hydraulischen Koppler 4 den Kolben 5 mit dem Verschließglied 12 in Richtung auf einen zweiten Sitz 7. Unterhalb des zweiten Sitzes ist an einem entsprechenden Kanal eine Düsennadel 11 angeordnet, die den Auslauf im Hochdruckkanal (Common-Rail-Druck) 13 schließt oder öffnet, je nachdem, welche Ansteuerspannung U anliegt. Der Hochdruck wird durch das einzuspritzende Medium, beispielsweise Kraftstoff für einen Verbrennungsmotor über einen Zulauf 9 zugeführt. Über eine Zulaufdrossel 8 und eine Ablaufdrossel 10 wird die Zuflußmenge des Mediums in Richtung auf die Düsennadel 11 und den hydraulischen Koppler 4 gesteuert. Der hydraulische Koppler 4 hat dabei die Aufgabe, einerseits den Hub des Kolbens 5 zu Verstärken und andererseits das Steuerventil von der statischen Temperaturdehnung des Aktors 2 zu entkoppeln. Die Wiederbefüllung des Kolbens ist in Fig. 1 nicht dargestellt.

Nachfolgend wird die Funktionsweise dieses Einspritzventils näher erläutert. Bei jeder Ansteuerung des Aktors 2 wird der Stellkolben 3 in Richtung des hydraulischen Kopplers 4 bewegt. Dabei bewegt sich auch der Kolben 5 mit dem Verschließglied 12 in Richtung auf den zweiten Sitz 7. Über Leckspalte wird dabei ein Teil des im hydraulischen Koppler 4 befindlichen Mediums, beispielsweise der Kraftstoff, herausgedrückt. Zwischen zwei Einspritzungen muß daher der hydraulische Koppler 4 wieder befüllt werden, um seine Funktionssicherheit zu erhalten.

Über den Zulaufkanal 9 herrscht ein hoher Druck P₁, der beim Common-Rail-System beispielsweise zwischen 200 und 1800 bar betragen kann. Dieser Druck wirkt gegen die Düsennadel 11 und hält sie geschlossen, so daß kein Kraftstoff austreten kann. Wird nun infolge der Ansteuerspannung U der Aktor 2 betätigt und damit das Verschlußglied 12 in Richtung des zweiten Sitzes bewegt, baut sich der Druck im Hochdruckbereich ab und die Düsennadel 11 gibt den Einspritzkanal frei.

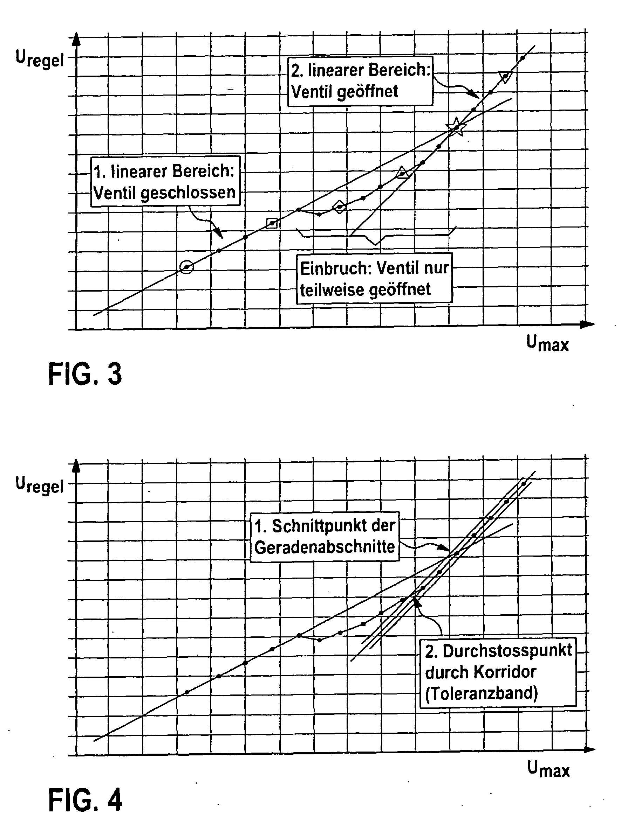

Grundidee der Erfindung ist es nun, den piezoelektrischen Aktor 2 selbst als Sensor zu benutzen, um den individuellen Spannungsbedarf des Einspritzventils oder Injektors 1 zu ermitteln. Hierzu wird das Einspritzventil 1 oder der Injektor bei jeweils gleicher Ladezeit mit unterschiedlichen Strömen beaufschlagt, eine erste, sich nach dem Aufladen des piezoelektrischen Aktors 2 einstellende maximale Spannung Uₘₐₓ und eine zweite, sich kurz vor dem Entladen des piezoelektrischen Aktors 2 einstellende konstante Spannung U_{Regel} wird bei unterschiedlichen, jeweils in dem gleichen Zeitintervall auf den piezoelektrischen Aktor 2 aufgebrachten Ladeströmen I erfaßt und das Verhältnis der ersten Spannung zu der zweiten Spannung kontinuierlich aufgezeichnet. Dabei ergibt sich ein in Fig. 3 und Fig. 4 dargestellter linearer Verlauf, wenn das durch den piezoelektrischen Aktor 2 betätigte Ventilschließglied 12 entweder ganz geschlossen oder ganz geöffnet ist, das heißt an seinem ersten Sitz 6 oder an seinem zweiten Sitz 7 anliegt. Diese Kennlinie wird in einem Steuergerät (nicht dargestellt) abgelegt, sie charakterisiert den Neuzustand des Einspritzventils 1 oder Injektors. Durch Auswertung der im Betrieb des Einspritzventils 1 erfaßten Spannungen Uₘₐₓ, U_{Regel} und Vergleich mit der so abgelegten Kennlinie wird ermittelt, ob sich das Verhalten gegenüber dem Neuzustand verändert hat, also beispielsweise eine Drift vorliegt. Wenn dies der Fall ist, wird die Kennlinie im Betrieb neu ermittelt, indem bei konstantem Lastzustand der Brennkraftmaschine, zum Beispiel im Leerlauf, der Strom, wie vorbeschrieben variiert wird. Auf diese Weise kann der Spannungsbedarf des Einspritzventils 1 auf die nachfolgend näher beschriebene Weise ermittelt und der piezoelektrische Aktor 2 mit der für ihn optimalen Spannung betrieben werden. Insbesondere können hierdurch Effekte wie Alterung und Temperaturdrift erkannt und kompensiert werden und es ist nicht mehr erforderlich, diese negativen Effekte mittels Kennlinien - wie aus dem Stand der Technik bekannt - zu kompensieren.

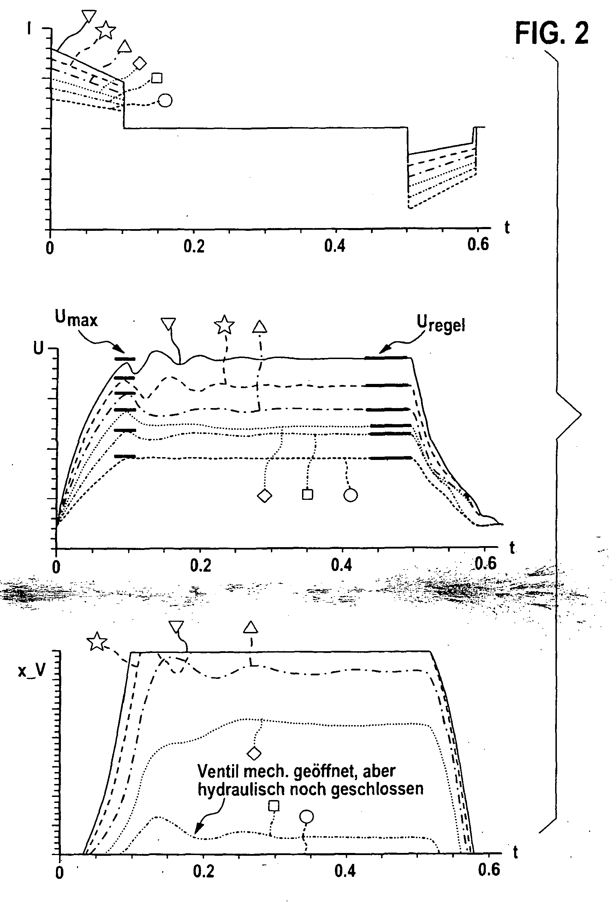

Das Verfahren wird nachfolgend in Verbindung mit den Fig. 2 bis 4 näher erläutert. Ausgenutzt wird der physikalische Effekt, daß eine Piezokeramik entsprechend ihrer Längendehnung eine Spannung induziert, welche detektiert werden kann. In der Ladephase wird der piezoelektrische Aktor 2, der elektrisch als Kapazität wirkt, bestromt mit unterschiedlichen Strömen I (siehe Fig. 2, oberstes Schaubild). Hierdurch steigt die Spannung mit zunehmendem Strom an (siehe Fig. 2, mittleres Schaubild). Da die Dehnung einer Piezokeramik näherungsweise proportional zum anliegenden elektrischen Feld und damit auch zur Spannung ist, dehnt sich der piezoelektrische Aktor 2 aus und das Schaltventil aus Kolben 5 und Ventilschließglied 12 wird über den hydraulischen Koppler 4 bewegt. Im normalen Betrieb des Einspritzventils 1 wird aus energetischen Gründen der Strom abgeschaltet, bevor das Schaltventil, gebildet durch Kolben 5 und Ventilschließglied 12, den zweiten Sitz 7 erreicht. Da sich das Einspritzventil 1 und damit der piezoelektrische Aktor 2 aufgrund der Eigengeschwindigkeit und der im hydraulischen Koppler 4 gespeicherten Druckenergie noch weiter bewegt, nimmt aufgrund des piezoelektrischen Effekts bei konstanter Ladung die Spannung ab, was sich im Spannungs-Zeit-Diagramm (Fig. 2, mittleres Schaubild) als deutlicher Knick mit ausgeprägtem Maximum zeigt. Dieses Maximum ist die Abschaltspannung Uₘₐₓ. Die Spannung nimmt nun so lange ab, bis das Ventilschließglied 12 den Anschlag im zweiten Sitz 7 erreicht hat. Der piezoelektrische Aktor 2 legt jetzt abhängig von der Steifigkeit der Schaltkette, bestehend aus piezoelektrischem Aktor 2, hydraulischem Koppler 4 und Steuerventil, bestehend aus Kolben 5 und Ventilschließglied 12, noch eine kleine Strecke zurück, bevor er zurückfedert und ausschwingt. Das Zurückfedern bedeutet eine Bewegungsrichtungsumkehr, was sich in einem ausgeprägten Minimum in der Spannungskennlinie zeigt (vgl. Fig. 2, mittleres Schaubild). Im Anschluß daran pendelt sich die Spannung auf ein konstantes Niveau, die Plateauspannung U_{Regel}, ein. Die Höhe von U_{Regel} ist dabei abhängig von der Kapazität und Ladung auf dem piezoelektrischen Aktor 2, von seiner Dehnung und damit auch vom erreichten Schaltventilhub. Um den Spannungsbedarf des Einspritzventils oder Injektors 1 zu ermitteln, wird der piezoelektrische Aktor 2 bei konstanter Ladezeit zunächst mit niedrigen Strömen betrieben. Der Aktor 2 führt dabei nur einen geringen Hub aus und das Schaltventil 13 bleibt geschlossen, es verbleibt also in seinem ersten Sitz 6. Die Spannungen Uₘₐₓ und U_{Regel} werden ermittelt. Sodann wird der Strom I von Einspritzzyklus zu Einspritzzyklus schrittweise erhöht und es werden ständig die erste Spannung oder Abschaltspannung Uₘₐₓ und die zweite oder Plateauspannung U_{Regel} aufgezeichnet. Wie in Fig. 3 dargestellt, steigt die Kennlinie U_{Regel}-Uₘₐₓ linear an. Sobald ein bestimmter Wert des Stroms I erreicht ist, öffnet das Schaltventil, das Ventilschließglied 12 bewegt sich hierbei von seinem ersten Sitz 6 weg. Da sich das Ventilschließglied 12 während der Ladephase bewegt und gleichzeitig der piezoelektrische Aktor 2 einen Hub ausführt (Fig. 2, unterstes Schaubild), nimmt die zweite Spannung oder Plateauspannung U_{Regel} aufgrund des Piezoeffekts ab. Die Kennlinie bricht ein und es bildet sich ein Minimum. Mit steigendem Strom dehnt sich der piezoelektrische Aktor 2 zunehmend aus. Da auch die Ladung auf dem piezoelektrischen Aktor 2 zunimmt, steigt die U_{Regel}-Uₘₐₓ-Kennlinie wieder an. Sobald der Strom I so hoch ist, daß das Ventilschließglied 12 den zweiten Sitz 7 erreicht, verhält sich die U_{Regel}-Uₘₐₓ-Kennlinie ähnlich wie bei geschlossenem Ventil wieder linear, allerdings jetzt mit einer größeren Steigung. Der Spannungsbedarf des piezoelektrischen Aktors 2 läßt sich nun auf verschiedene Art und Weise ermitteln.

Eine erste Möglichkeit besteht, wie in Fig. 4 gezeigt, darin, den linearen Abschnitt bei geschlossenem Schaltventil (Ventilschließglied 12 befindet sich am ersten Sitz 6) zu verlängern und den Schnittpunkt des benachbarten zweiten linearen Abschnitts (Schaltventil offen - Ventilschließglied 12 befindet sich am zweiten Sitz 7) zu ermitteln. Der Schnittpunkt U_{Regel} in dem Diagramm U_{Regel} über Uₘₐₓ wird in diesem Falle als Spannungsbedarf des piezoelektrischen Aktors 2 gespeichert.

Eine andere Möglichkeit besteht darin, gewissermaßen ein "Toleranzband", also jeweils zu größeren und kleineren Werten parallel verlaufende Geraden, um den zweiten linearen Abschnitt der Kennlinie zu legen und den Schnittpunkt des vorerwähnten verlängerten ersten linearen Abschnitts und des Toleranzbands zu ermitteln. Dieser Schnittpunkt wird dann als Spannungsbedarf gewertet.

Eine weitere Möglichkeit besteht darin, die erste und weitere Ableitung der U_{Regel}-Uₘₐₓ Kennlinie zu bilden, so eine Änderung der Steigung benachbarter linearer Bereiche zu bestimmen und aufgrund des Schnittpunktes der benachbarten linearen Bereiche unterschiedlicher Steigung auf den Spannungsbedarf zu schließen.

Zur Ermittlung der Kennlinie ist eine schrittweise Änderung der Stromhöhe erforderlich. Wenn diese während des Betriebs im Fahrzeug erzeugt werden soll, bietet es sich an, mit hohen Strömen zu beginnen und diese dann zu verringern. Sobald der Spannungsbedarf des piezoelektrischen Aktors 2 auf die oben beschriebene Weise ermittelt wurde, ist eine weitere Absenkung des Stroms I nicht erforderlich, weil mit dem Übergang zum ersten linearen Bereich das Ventilschließglied 12 nicht mehr öffnet und somit keine Einspritzung mehr stattfindet, also an seinem ersten Sitz 6 verbleibt. Dies würde die Drehzahl des Motors auf unerwünschte Weise merkbar ändern. Bei Anfahren der Kennlinie von großen Strömen herkommend, wird dagegen vom Fahrer eines Fahrzeuges von der Ermittlung der Kennlinie nichts bemerkt, da sich die Einspritzmenge nur minimal ändert.

Der Zusammenhang zwischen Uₘₐₓ und U_{Regel} linear, wenn das Ventilschließglied 12 einen definierten Endzustand erreicht hat, also entweder geschlossen bleibt, das heißt an dem Sitz 6 verbleibt, oder ganz öffnet, also an dem zweiten Sitz 7 zur Ruhe kommt. Öffnet das Ventilschließglied 12 dagegen nur teilweise, so ist die Endposition undefiniert, was sich in der U_{Regel}-Uₘₐₓ-Kennlinie als Einbruch zeigt. Aus der U_{Regel}-Uₘₐₓ-Kennlinie kann daher im Ergebnis der für einen stabilen Betrieb notwendige Spannungsbedarf des piezoelektrischen Aktors 2 ermittelt werden. Eine Ermittlung der Kennlinie und ein Ablegen von einem Steuergerät bei der Endprüfung des Einspritzventils 1 bietet zudem die Möglichkeit, Abweichungen vom Neuzustand im Betrieb zu erkennen. Durch eine Neuerstellung der Kennlinie im Betrieb kann zudem der aktuelle Spannungsbedarf jedes einzelnen Einspritzventils 1 ermittelt und somit auch aufgrund von Alterungserscheinungen verändertes Öffnungs- und Schließverhalten von Einspritzventilen 1 nicht nur erkannt, sondern die hierdurch hervorgerufenen Einspritzmängel auch behoben werden.

## Patentansprüche

1. Verfahren zur Bestimmung der Ansteuerspannung für einen piezoelektrischen Aktor (2) eines Einspritzventils (1), **dadurch gekennzeichnet, dass** eine erste, sich nach dem Aufladen des piezoelektrischen Aktors (2) einstellende maximale Spannung (Uₘₐₓ) und eine zweite, sich kurz vor dem Entladen des piezoelektrischen Aktors (2) einstellende konstante Spannung (U_{Regel}) bei unterschiedlichen, jeweils in einem gleichen Zeitintervall auf den piezoelektrischen Aktor (2) aufgebrachten Ladeströmen (I) erfasst werden, und dass die Beziehung zwischen der zweiten und der ersten Spannung ausgewertet und hieraus auf den Spannungsbedarf des piezoelektrischen Aktors (2) geschlossen wird.

2. Verfahren nach Anspruch 1, **dadurch gekennzeichnet, dass** die Auswertung der Beziehung zwischen der zweiten und der ersten Spannung anhand eines funktionalen Zusammenhangs zwischen der zweiten und der ersten Spannung erfolgt.

3. Verfahren nach Anspruch 2, **dadurch gekennzeichnet, dass** beginnend von einem vorgegebenen ersten Strom der auf den piezoelektrischen Aktor (2) aufgebrachte Strom (I) schrittweise verringert/erhöht wird und dass der funktionale Zusammenhang zwischen der zweiten Spannung und der ersten Spannung bei jedem Strom ermittelt und gespeichert wird und dass aus der ersten und weiteren Ableitungen der zweiten Spannung nach der ersten Spannung auf den Spannungsbedarf des piezoelektrischen Aktors (2) geschlossen wird.

4. Verfahren nach Anspruch 1 oder 2, **dadurch gekennzeichnet, dass** der auf dem piezoelektrischen Aktor (2) aufgebrachte Strom ausgehend von einem ersten vorgegebenen Wert schrittweise verringert/erhöht wird und der funktionale Zusammenhang der zweiten Spannung und der ersten Spannung ermittelt wird, dass lineare Bereiche des funktionalen Zusammenhangs ermittelt werden und dass ein Schnittpunkt zweier benachbarter linearer Bereiche bestimmt wird und dieser Wert als Spannungsbedarf des piezoelektrischen Aktors (2) gewertet wird.

5. Verfahren nach Anspruch 4, **dadurch gekennzeichnet, dass** parallel zu den benachbarten linearen Bereichen jeweils um vorgegebene Werte verschobene Geraden gebildet werden und der Schnittpunkt dieser Toleranzbereiche bestimmt und der so ermittelte Wert der zweiten Spannung in der zweiten Spannung, ersten Spannung- Diagramm als Spannungsbedarf des piezoelektrischen Aktors (2) gewertet wird.

6. Verfahren nach einem der vorstehenden Ansprüche, **dadurch gekennzeichnet, dass** die Beziehung zwischen der zweiten und der ersten Spannung in Form einer Kennlinie in einem Steuergerät gespeichert wird.

7. Verfahren nach Anspruch 6, **dadurch gekennzeichnet, dass** die in dem Steuergerät gespeicherte Kennlinie nach Ablauf einer vorgebbaren Betriebszeit mit einer neu ermittelten Kennlinie verglichen wird und bei Abweichungen auf Veränderungen im Einspritzventil geschlossen wird.

8. Verfahren nach Anspruch 7, **dadurch gekennzeichnet, dass** im Falle von festgestellten Veränderungen im Einspritzventil die Beziehung zwischen der zweiten und der ersten Spannung im Betrieb des Einspritzventils neu ermittelt und die Kennlinie im Steuergerät gespeichert wird.

9. Verfahren nach Anspruch 8, **dadurch gekennzeichnet, dass** die Ermittlung der Beziehung zwischen der zweiten und der ersten Spannung bei einem konstanten Lastzustand der Brennkraftmaschine, insbesondere im Leerlauf der Brennkraftmaschine, erfolgt.

10. Vorrichtung, **dadurch gekennzeichnet, dass** sie zur Durchführung des Verfahrens nach einem der Ansprüche 1 bis 9 ausgebildet ist.

## Claims

1. Method for determining the drive voltage of a piezoelectric actuator (2) of an injection valve (1), **characterized in that** a first maximum voltage (Uₘₐₓ) which is set after the piezoelectric actuator (2) is charged and a second constant voltage (U_{Regel}) which is set shortly before the piezoelectric actuator (2) is discharged are sensed with different charging currents (I) which are respectively applied to the piezoelectric actuator (2) in the same time interval, and **in that** the relationship between the second and the first voltages is evaluated and the voltage requirement of the piezoelectric actuator (2) is concluded there from.

2. Method according to Claim 1, **characterized in that** the relationship between the second and the first voltages is evaluated on the basis of a functional interrelation between the second and first voltages.

3. Method according to Claim 2, **characterized in that** starting from a predefined first current, the current (I) which is applied to the piezoelectric actuator (2) is incrementally decreased/increased, and **in that** the functional interrelation between the second voltage and the first voltage is determined for each current and stored, and **in that** the voltage requirement of the piezoelectric actuator (2) is concluded from the first derivation and from further derivations of the second voltage according to the first voltage.

4. Method according to Claim 1 or 2, **characterized in that** the current which is applied to the piezoelectric actuator (2) is incrementally decreased/increased starting from the first predefined value, and the functional interrelation between the second voltage and the first voltage is determined, **in that** linear regions of the functional interrelation are determined, and **in that** the point of intersection of two adjacent linear regions is determined and this value is evaluated as a voltage requirement of the piezoelectric actuator (2).

5. Method according Claim 4, **characterized in that**, in parallel with the adjacent linear regions, straight lines which are each displaced by predefined values are formed and the point of intersection of these tolerant regions is determined, and the value which is determined for the second voltage in this way is evaluated in the diagram for the second and first voltages as a voltage requirement of the piezoelectric actuator (2).

6. Method according to one of the preceding claims, **characterized in that** the relationship between the second and first voltages is stored in the form of a characteristic curve in a control device.

7. Method according to Claim 6, **characterized in that** the characteristic curve which is stored in the control device is compared with a newly determined characteristic curve after the expiry of a predefineable operating time, and in the case of deviations it is concluded that there are changes in the injection valve.

8. Method according to Claim 7, **characterized in that**, if changes are detected in the injection valve, the relationship between the second and the first voltages is newly determined while the injection valve is operating, and the characteristic curve is stored in the control device.

9. Method according to Claim 8, **characterized in that** the relationship between the second and the first voltages is determined when there is a constant load state of the internal combustion engine, in particular in the idling mode of the internal combustion engine.

10. Device, **characterized in that** it is designed to carry out the method according to one of Claims 1 to 9.

## Revendications

1. Procédé pour déterminer la tension de commande de l'actionneur piézoélectrique (2) d'un injecteur (1)
**caractérisé en ce qu'**
on saisit une première tension maximale Uₘₐₓ qui s'établit après la mise en charge de l'actionneur piézoélectrique (2) et une seconde tension constante (U_{regel}) qui s'établit juste avant la décharge de l'actionneur piézoélectrique (2) pour des courants de charge (1), différents, appliqués dans un même intervalle de temps à l'actionneur piézoélectrique (2) on exploite la relation entre la seconde et la première tension et on en déduit la tension demandée par l'actionneur piézoélectrique (2).

2. Procédé selon la revendication 1,
**caractérisé en ce que**
l'exploitation de la relation entre la seconde et la première tension se fait à l'aide d'une relation fonctionnelle entre la seconde et la première tension.

3. Procédé selon la revendication 2,
**caractérisé en ce qu'**
en commençant par une première intensité prédéfinie du courant appliqué à l'actionneur piézoélectrique (2), on diminue/augmente pas à pas,
on détermine et on mémorise la relation fonctionnelle entre la seconde tension et la première tension pour chaque intensité, et
à partir de la première et des autres dérivés de la seconde tension, après la première tension, on conclut à la demande de tension de l'actionneur piézoélectrique (2).

4. Procédé selon la revendication 1 ou 2,
**caractérisé en ce que**
l'on diminue/augmente pas à pas le courant appliqué à l'actionneur piézo-électrique (2) en partant d'une première valeur prédéfinie et on détermine la relation fonctionnelle de la seconde tension et de la première tension,
on détermine des zones linéaires de la relation fonctionnelle, et
on détermine un point d'intersection de deux zones linéaires voisines et
on exploite cette valeur comme étant la tension demandée par l'actionneur piézoélectrique (2).

5. Procédé selon la revendication 4,
**caractérisé en ce qu'**
en parallèle aux zones linéaires voisines, on forme chaque fois des droites décalées de valeurs prédéfinies, on détermine le point d'intersection de ces plages de tolérance et on exploite la valeur ainsi déterminée de la seconde tension dans le diagramme seconde tension , première tension comme tension demandée par l'actionneur piézoélectrique (2).

6. Procédé selon l'une des revendications précédentes,
**caractérisé en ce qu'**
on mémorise la relation entre la seconde et la première tension sous la forme d'une courbe caractéristique dans un appareil de commande.

7. Procédé selon la revendication 6,
**caractérisé en ce que**
l'on compare la courbe caractéristique mémorisée dans l'appareil de commande à la fin d'un temps de fonctionnement prédéfini avec une nouvelle courbe caractéristique obtenue et, en cas d'écart, on conclut à des modifications dans l'injecteur.

8. Procédé selon la revendication 7,
**caractérisé en ce que**
on détermine de nouveau la relation entre la seconde et la première tension pendant le fonctionnement de l'injecteur si l'on constate des modifications dans l'injecteur et on mémorise la courbe caractéristique dans l'appareil de commande.

9. Procédé selon la revendication 8,
**caractérisé en ce que**
l'on détermine la relation entre la seconde et la première tension pour un état de charge constant du moteur à combustion interne, notamment lorsque le moteur à combustion interne fonctionne au ralenti.

10. Dispositif **caractérisé en ce qu'**il est conçu pour exécuter le procédé selon l'une des revendications 1 à 9.
